Europäisches Patentamt

(19) European Patent Office

Office européen des brevets

(11) Publication number: **0 274 388**
A2

# (12) EUROPEAN PATENT APPLICATION

(21) Application number: **88100113.5**

(22) Date of filing: **07.01.88**

(51) Int. Cl.⁴: **B 62 D 7/14**
**B 62 D 9/00**

(30) Priority: **09.01.87 GB 8700475**

(43) Date of publication of application:
**13.07.88 Bulletin 88/28**

(84) Designated Contracting States:
**AT BE CH DE ES FR GB GR IT LI LU NL SE**

(71) Applicant: **S.S.P. FORKTRUCKS LIMITED**
**487 Bradford Road**
**Batley West Yorkshire WF17 8LB (GB)**

(72) Inventor: **Hull, Stuart**
**781 Bradford Road**
**Batley West Yorkshire WF17 8NB (GB)**

(74) Representative: **Denmark, James**
**5 York Place**
**Leeds LS1 2SD Yorkshire (GB)**

(54) Improvements relating to the steering of wheeled vehicles.

(57) A side loader is provided with a pair of front wheels and a pair of rear wheels on front and rear axles. Each pair of wheels is steerable by its own piston and cylinder in either of two modes controlled by a clutch. In the first mode the wheels of each pair are steered by different angular amounts for turning of the vehicle, but in the second mode the wheels of both pairs are steered by the same angular amounts so that the vehicle can move bodily at an angle, up to 90°, to the normal fore and aft direction of the vehicle.

## Description

Improvements Relating to the Steering of Wheeled Vehicles.

This invention relates to wheeled vehicles, and concenrs particularly but not exclusively a wheeled vehicle known as a side loading fork lift truck, or for short "side loader".

A side loader is a vehicle comprising a platform for the support of loads, and to one side of the platform is a cab for an operastor and a power unit for the vehicle. The vehicle is essentially hydraulically powered, and the said power unit may comprise an internal combustion engine driving a hydraulic pump, the output of which supplies various hydraulic rams and hydraulic hub motors for the powering of the vehicle wheels for the propulsion of the vehicle. The vehicle has a fore and aft direction, and the power unit and cab are arranged to one side of the platform and in alignment in the fore and aft direction. The platform is cut away centrally of the vehicle in order to accommodate a fork lift mechanism, having forks which can be raised and lowered for the raising and lowering of loads, and which can also be moved laterally of the fore and aft direction of the vehicle so that the forks project from the side of the vehicle for the lifting of a load, and can be retracted to a position over the platform sections for the lowering of the load onto the platform sections, the vehicle being capable of being driven from place to place whilst loaded for the transportation storage and extraction from storage of the said loads.

A side loader normally has two pairs of wheels which are referred to herein as a front pair of wheels and a rear pair of wheels although in a side loading vehicle it is not as appropriate to refer to front and rear as in the case for example of motor vehicles. The front and rear pairs of wheels are spaced in the fore and aft direction of the vehicle, and it is usual to provide that one pair of wheels is steerable by a steering mechanism which causes the wheels to turn from the fore and aft of forward motion direction by different amounts so that the inner wheel having regard to the direction of turning, turns through a greater angle than the outer wheel. This as is well known in steering arrangements in general cuts down on tyre scrub during cornering. Steering only one pair of the side loader wheels limits the manoeuvrability of the vehicle and as can be appreciated, the more manoeuvrable is a side loader, the greater its utility, and the greater the space which can be allocated to providing storage rather than providing aisles and driveways for loader vehicles, and the present invention aims to modify the steering of a vehicle, especially but not exclusively a side loader, whereby the vehicles manoeuvrability can be increased.

According to a general aspect of the invention, a vehicle provided with front and rear pairs of wheels is provided with a steering mechanism for each pair of wheels enabling the front and rear wheels to be normally steered i.e. so that the wheels of each pair turn through different angles as described above. By this means the vehicle can be made to "drift" steer which is a steering motion wherein the vehicle in addition to a turning movement of the vehicle, also executes a sideways movement.

More particularly, the invention provides for two modes of steering of the vehicle, and in accordance with another aspect of the invention there is provided a wheeled vehicle comprising:

two spaced steerable wheels, each being steerable about its own upright steering axis, a first steering linkage adapted to steer the wheels from a forward motion position about said steering axis to enable the vehicle to turn right or left, said linkage being adapted to turn the wheels differentially in that the inner of said wheels, having regard to the direction of the turn, turns to a greater extent than the outer of said wheels,

a second steering linkage adapted to turn the wheels from said forward motion position to the right or left by the same amount, and

a clutch mechanism adapted to clutch and declutch the first and second steering linkage so that only one of said steering linkages is operative at any one time.

Preferably wherein said first steering linkage comprises crank arms connected to respective drive bushes which are rotatable respectively about said steering axes, said drive bushes being clutchable to steerable mountings rotatable respectively about said axes and carrying said wheels in upright planes which are offset relative to said axes, and a drive position and cylinder device under the control of the vehicle operator and coupled to said crank arms at locations offset relative to said axes, said crank arms in the forward motion position being angled symmetrically relative to the forward motion direction so that upon actuation of the piston and cylinder device, when the first steering linkage is operative, causes the crank arms to swing in the same direction but through different angular extents to give said differential steering.

Preferably also, said second steering mechanism comprises two sprockets, pulleys or the like arranged respectively with their axes coincident with the steering axes, chain means, belt means or the like trained round said sprockets, pulleys or the like, and connection means connecting the piston and cylinder device with said chain means, pulley means or the like, said sprockets, pulleys or the like being clutchable to and declutchable from said mountings so that when said second steerage linkage is operative, and the piston and cylinder device is actuated the sprockets, pulleys or the like will be turned by equal amounts in the same direction.

It will be understood that the preferred form of the invention provides a vehicle, especially a side loader, with extensive manoeuvrability and indeed if the steering utilising the sprockets, pulleys or the like and the chains, belts or the like are adapted so that the wheels can be moved through 90°, then, by providing such steering arrangements on the front and rear wheels of a side loader, the vehicle can be made to move bodily i.e. without turning, at right angles to the normal forward motion direction.

An embodiment of the invention will now be described by way of example, with reference to the accompanying drawings, wherein:-

Fig. 1 is a side view of a side loader;

Fig. 2 is an end view of the side loader shown in Fig. 1;

Fig. 3 is a plan view of the side loader in Fig. 1 and also shows the loader during a manoeuvring operation in two aisles in a storage facility;

Fig. 4 is a plan view of the wheel arrangement of the loader shown in Fig. 1 and the extent to which the wheels can be steered in the first mode of operation;

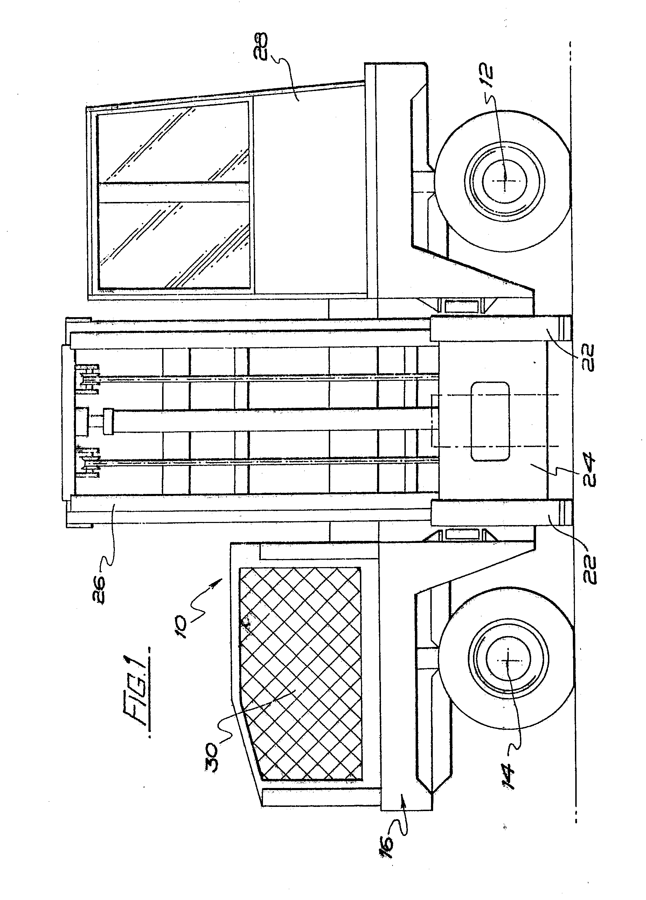

.5 is a side view of one of the axles of the loader shown in Fig. 1;

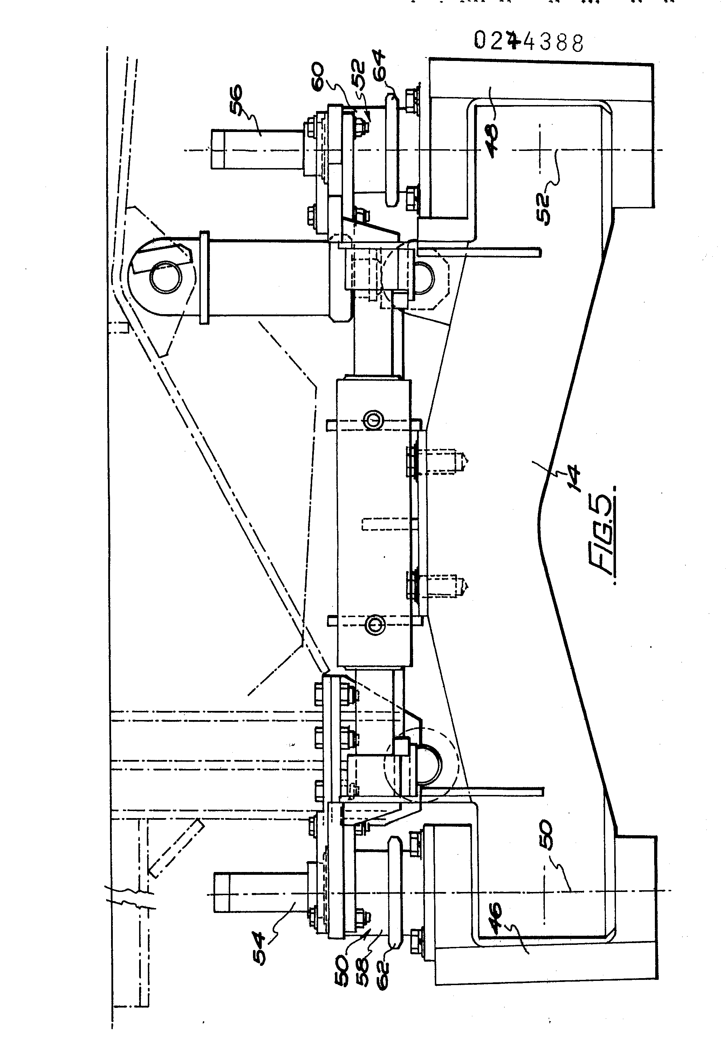

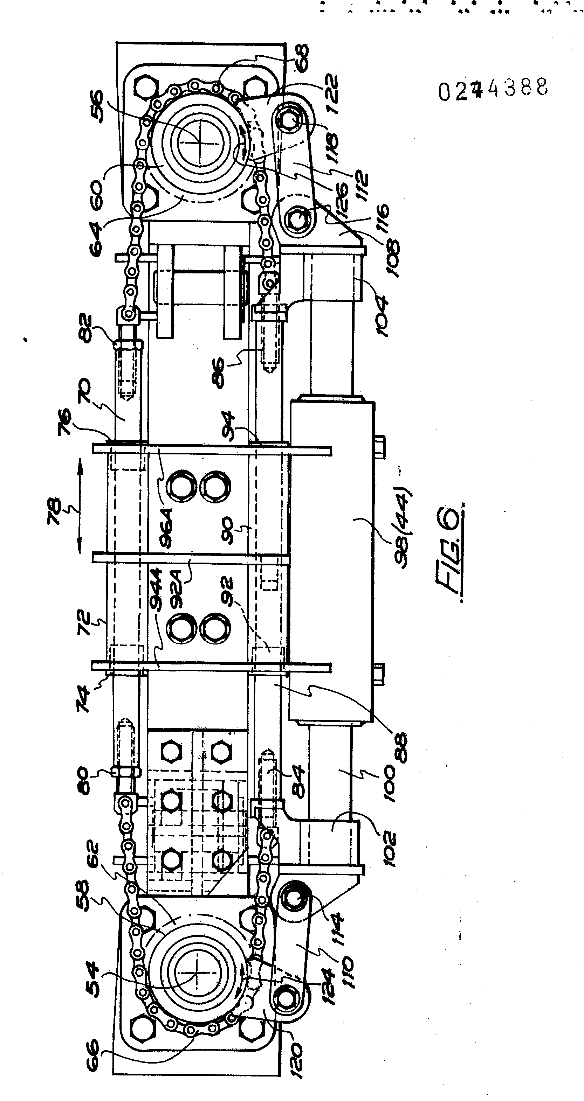

Fig. 6 is a plan view of the axle shown in Fig. 5;

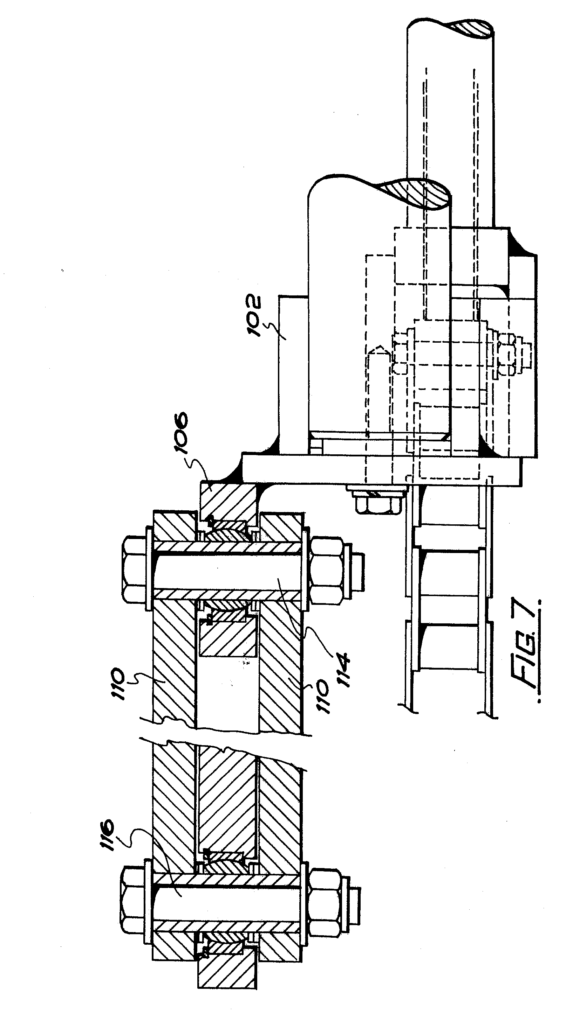

Fig. 7 is a sectional elevation of a portion of the axle shown in Fig. 6, the section being taken on the line A-A in Fig. 6; and

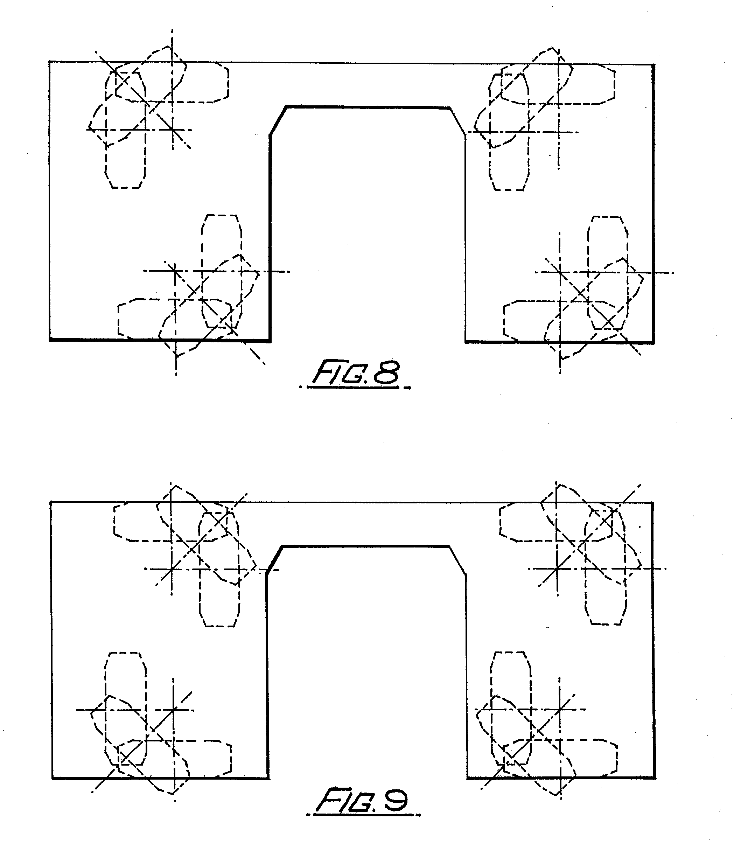

Figs. 8 and 9 illustrate how the vehicle may be steered to the left or the right when in the second mode of operation.

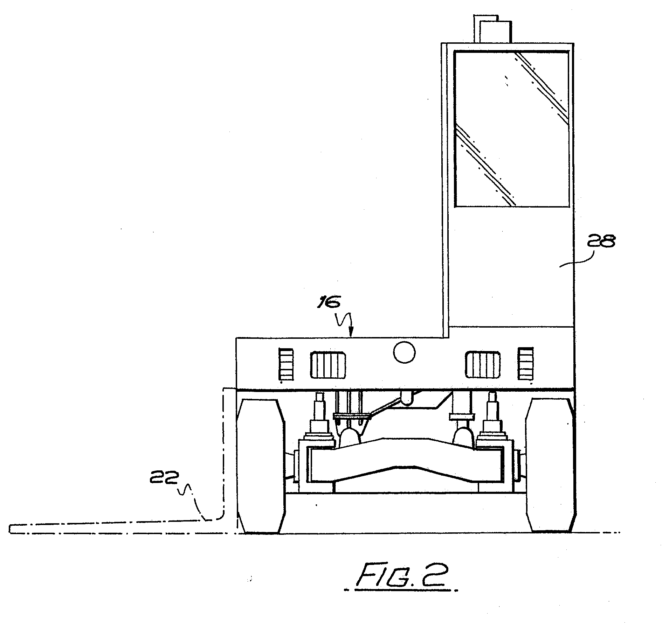

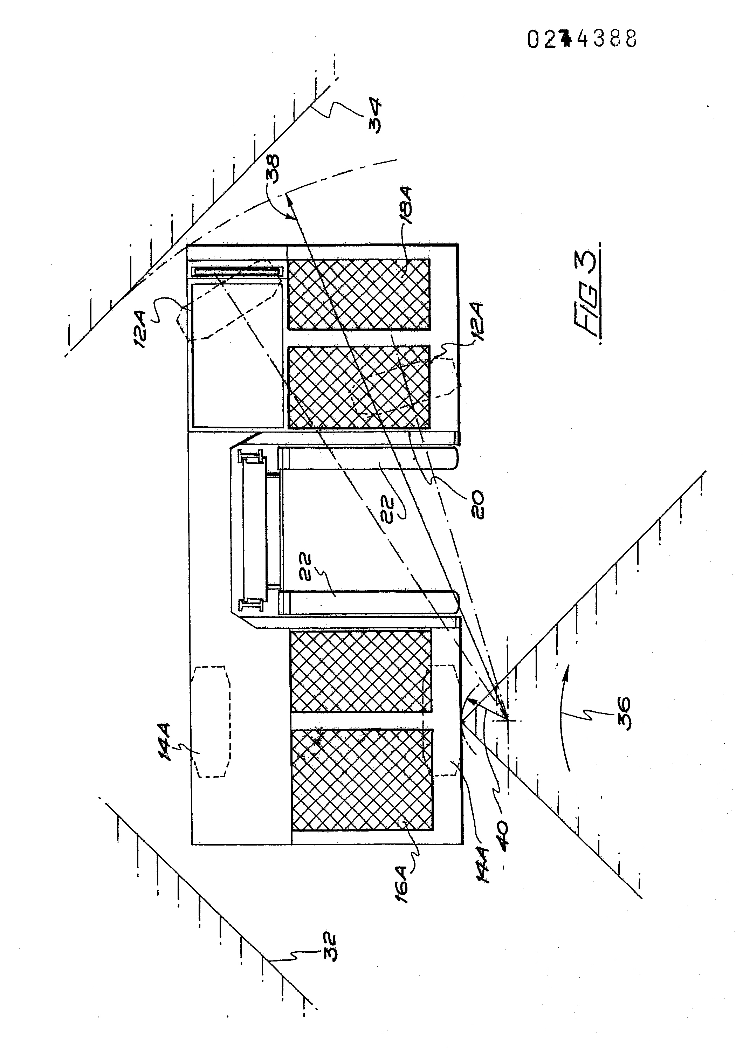

Referring to the drawings, and firstly to Figs. 1 to 3, a side loader 10 is provided with front and rear axles 12 and 14 which support a platform 16 split into two sections 16A and 18A separated by a cut-out 20 which houses a lifting fork comprising a pair of fork arms 22. The arms 22 are supported on a plate 24 which can be raised and lowered on a lifting frame 26 in conventional manner. As shown in Fig. 2, the forks 22 can be moved to an outward position whereby they can be engaged in load pallets, and the forks can then be raised to the level of the platform 16, and retracted to the position shown in Fig. 3 and the loads can be lowered onto the platform 16 for transportation and relocation.

To one side of the platform 16 is provided a driver's cab 28 and a power unit 30 comprising for example an internal combustion engine and fuel tank. The power unit 30 suitably drives a hydraulic pump and the operational components of the entire side loader are hydraulically driven from the output of the hydraulic pump. The connection and controls are conventional and are not shown.

With such a vehicle it is desirable that it should be as manoeuvrable as possible i.e. be able to make turning and steering movements within a smaller space as possible as otherwise in any particular storage location excess space may have to be given over to allowing the vehicle to work effectively.

Conventionally, a steering facility is provided for the vehicle which renders it capable of reasonable manoeuvrability. Thus, as regards the side loader which is shown in Figs. 1, 2 and 3, which can be assumed to be conventional for the time being, the loader is provided with a pair of front wheels 12A and a pair of rear wheels 14A. As explained herein front and rear are relative terms for convenience, it being understood that the vehicle can be driven in either direction. One or more of the wheels 12A and 14A will be provided with a hydraulic hub motor for the propulsion of the vehicle. In the arrangement of Fig. 3, the wheels 14A are fixed on the axle 14 so as not to be capable of steering movement, whilst the wheels 12A are capable of steering movement and in Fig. 3 are shown in their extreme position of steering movement for making a right hand turn. Such arrangement enables the vehicle to be driven from a narrow aisle 32 into a broader aisle 34. In the arrangement shown, the inner wheel 12A having regard to the direction of the turn which the vehicle is making as indicated by arrow 36, has been turned through an angle of the order of 75°, whilst the outer wheel 12A has been turned through an angle of the order of 57°. These angular adjustments are achieved by virtue of the vehicle steering mechanism which is used and which will be described hereinafter. In this condition, the maximum outer turning radius of the vehicle is indicated by reference 38 whilst the minimum turning radius is indicated by reference 40. It is seen that the aisle 34 must be considerably wider than the aisle 32 to enable this form of steering to take place.

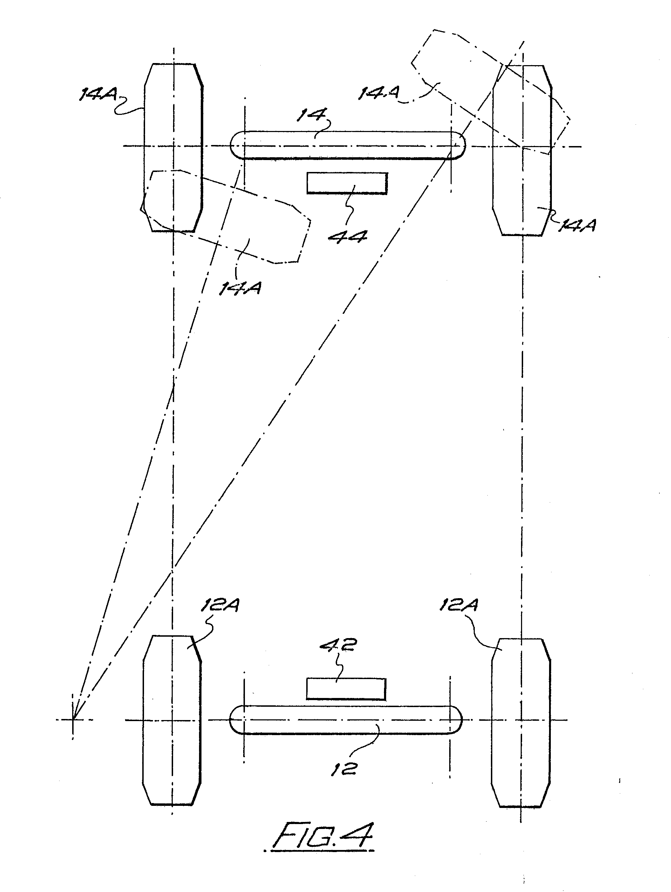

Fig. 4 shows the front and rear wheels of the side loader vehicle shown in Fig. 1, but provided with steering arrangements for both front and rear wheels, and in Fig. 4 the rear wheels 14A are shown in chain dotted lines in the maximum steered position corresponding to the position of the front wheels shown in Fig. 3. The steering of the wheels in this fashion is achieved by the cylinders 42 and 44 which are connected by their piston rods and linkages to steering hubs of the wheels 12A and 14A. By the arrangement of Fig. 4, which constitutes an aspect of the present invention, all four wheels may be steered, enhancing the manoeuvrability of the vehicle, and enabling the vehicle to be steered in a drift steering arrangement.

By suitable control means, the cylinders 42 and 44 may be capable of being operated independently depending upon the manoeuvre which the operator wishes the vehicle to execute.

In the preferred form of the invention, the steerability of the wheels 12A and 14A is further enhanced as will now be explained with reference to Figs. 5 to 9. Figs. 5, 6 and 7 show one of the vehicle axles, in this case axle 14, but it is to be pointed out that the construction and operation of axle 12 is identical except, as shown in Fig. 4, the axles are arranged so that the cylinders 42 and 44 are inwardly of the vehicle relative to the axles themselves.

Mounted on the ends of axle 14 are wheel mountings 46, 48 which are pivotable about axles 50, 52 which are upright, and in the example shown are vertical. Secured to each of the mountings 46, 48 is a clutch 50, 52 which is operated by a hydraulic ram 54, 56. Carried by a hub or bush 58, 60 of the clutch is a sprocket 62, 64 which by operation of the clutch 54 or 60 can be clutched into driving arrangement with the mounting 46 or 48 or can be declutched therefrom so as to free-wheel relative thereto.

As shown in Fig. 6, trained around the sprockets 62, 64 are lengths of chain 66, 68 and a first pair of ends of the lengths of chain are connected to a slidable tension rod 70 which is slidably supported by a casing 72 via bearings 74, 76 so that the rod can slide in casing 72 as indicated by arrow 78. The chain lengths ends are connected by screw adjusters 80, 82 for adjusting the tension in the chain lengths. The other ends of the chain lengths are connected again through tension adjusting screws to the ends of a rod 88 which is similarly supported in a casing 90 by means of bearings 92 and 94. The casings 72 and 90 are secured to each other and to the axle 14 by means of reinforcing plates 92A, 94A and 96A. The said plates also support a cylinder 98 in which is contained a piston rod 100. The piston rod 100 extends from each end of cylinder 98 and is slidable relative thereto, and the ends of the piston rods are connected to brackets 102, 104 which in turn are fast with the ends of the rod 88. The piston contained in cylinder 98 is double acting and therefore the piston rod 100 by appropriate pressurisation of the cylinder can be made to move to the right or left under the control of the operator. When the piston is so moved, as will be understood, the rods 88 and 70 are driven in opposite directions and in the manner as indicated by arrow 78, causing the chains 66 and 68 to drive the sprockets 62 and 64 and to turn same. If the sprockets are clutched to the mountings 46 and 48, so the mountings are turned by the same angle and in the same direction relative to the fore and aft direction of the vehicle.

In the preferred form of the invention, the axle arrangements are identical, and therefore pressurisation of both cylinders 44 and 42 as shown in Fig. 4 results in all of the wheels 12A and 14A turning in the same direction and by the same amount relative to the fore and aft direction of the vehicle.

If reference is made in fact to Figs. 8 and 9, these drawings show how the wheels can be steered in this fashion to the left in the case of Fig. 8, and to the right in the case of Fig. 9. By arranging the geometry of the diameter of the sprockets, and the stroke of the piston rod, the wheels as shown in Fig. 8 and 9 can be turned to the left or the right in this mode of steering by an angle up to 90°. The manoeuvrability of the vehicle by such a steering arrangement is of course considerably enhanced.

As explained herein, the vehicle is also capable of having each pair of wheels steered in the conventional manner, and this is achieved in accordance with the preferred method of the invention, by providing brackets 102 and 104 as shown in Fig. 6 with bracket plates 106, 108 to which are pivotably connected link pairs 110, 112 by pivot pins 114, 116. The links 110, 112 are in their turn connected by pivot pins 116, 118 to crank arms 120 and 122 which are fast with the drums 58 and 60 of the clutches 50 and 52. It is to be noticed that in Fig. 6, the crank arms 120, 122, are arranged at an acute angle 124, 126 to the fore and aft direction of the vehicle, and the cranks are angled outwardly in a symmetrical arrangement.

The clutches 50 and 60 are operable so that the hubs 58 and 60 can be clutched to and declutched from the mountings 46 and 48. When the hubs are clutched to the mountings 46 and 48, the sprockets 62 and 64 are declutched and free-wheel. In this condition, which forms the first and conventional mode of steering, operation of the cylinder and piston 98, 100 to cause the piston to move to the right or left in Fig. 6 causes the cranks 120, 122 to be pivoted and hence the hubs 58 and 60 and the mountings 46 and 48 to be pivoted, and the appropriate pair of wheels to be steered in the manner indicated in Fig. 3 or Fig. 4. The differential turning of the wheels of each pair is achieved by the geometrical arrangement of the cranks 120 and 122 in that if the piston rod 100 moves to the right in Fig. 6, the angle through which the crank 120 is swept, because the links 110 travel more tangentially in relation to the sprocket 62 than do the links 112 in relation to the sprocket 64, is greater than the angle through which the sprocket 64 is turned hence the differential turning of the wheels as shown in Fig. 4.

By providing the vehicle with the two different modes of steering, considerable manoeuvrability is achieved. In the extreme, the vehicle can by positioning the wheels to the maximum steering position of the second mode of operation and as shown in Figs. 8 and 9, the vehicle can move at right angles to its normal fore and aft direction without any tyre scrub.

By operating the vehicle in the first mode of steering, the pairs of wheels can be steered to any desired angle to have normal steering or drift steering. In the first mode of operation, it is preferable that the pairs of wheels can be steered independently, whilst in the second mode of operation it is desirable that the cylinders 42 and 44 be interlinked so that all wheels will always turn by the same amount and in the same direction.

Although the invention has particular application to side loaders and loading vehicles in general, it is submitted that it could be applied to any wheeled vehicle having an appropriate steering requirement.

## Claims

1. A wheeled vehicle comprising:
two spaced steerable wheels, each being steerable about its own upright steering axis, a first steering linkage adapted to steer the wheels from a forward motion position about said steering axis to able the vehicle to turn right or left, said linkage being adapted to turn the wheels differentially in that the inner of said wheels, having regard to the direction of the turn, turns to a greater extent than the outer of said wheels,
a second steering linkage adapted to turn the wheels from said forward motion position to the right or left by the same amount, and
a clutch mechanism adapted to clutch and declutch the first and second steering linkage so that only one of said steering linkages is operative at any one time.

2. A wheeled vehicle according to Claim 1, wherein said first steering linkage comprises crank arms connected to respective drive bushes which are rotatable respectively about said steering axes, said drive bushes being clutchable to steerable mountings rotatable respectively about said axes and carrying said wheels in upright planes which are offset relative to said axes, and a drive position and cylinder device under the control of the vehicle operator and coupled to said crank arms at locations offset relative to said axes, said crank arms in the forward motion position being angled symmetrically relative to the forward motion direction so that upon actuation of the piston and cylinder device, when the first steering linkage is operative, causes the crank arms to swing in the same direction but through different angular extents to give said differential steering.

3. A wheeled vehicle according to Claim 2, wherein said piston and cylinder device comprises a cylinder with a double acting piston, the rod of which extends out of both ends of the cylinder and the respective ends are connected to brackets which are in turn connected to said crank arms by push rod links.

4. A wheeled vehicle according to Claim 2 or 3, wherein said cranks and piston and cylinder device are arranged so that the maximum extent to which either wheel can be steered by the first steering mechanism is of the order of 75°, the other wheel in such case being turned by an angle in the order of 57°.

5. A wheeled vehicle according to any of Claims 2 to 4, including an axle, said mountings being pivotally mounted on the respective ends of said axle for steering movements about said steering axis.

6. A wheeled vehicle according to any of Claims 2 to 4, wherein second steering mechanism comprises two sprockets, pulleys or the like arranged respectively with their axes coincident with the steering axis, chain means, belt means or the like trained round said sprockets, pulleys or the like, and connection means connecting the piston and cylinder device with said chain means, pulley means or the like, said sprockets, pulleys or the like being clutchable to and declutchable from said mountings so that when said second steerage linkage is operative, and the piston and cylinder device is actuated the sprockets, pulleys or the like will be turned by equal amounts in the same direction.

7. A wheeled vehicle according to Claim 6, wherein there are two sprockets and two lengths of chain respectively trained round said sprockets, one pair of ends of said lengths of chains being coupled together by a rod, and the other ends being connected to said piston and cylinder device.

8. A wheeled vehicle according to any preceding claim wherein said second steering linkage, when operative is adapted to turn the wheels by any angle up to 90° relative to said forward motion position.

9. A wheeled vehicle wherein the vehicle has two pair of wheels, a front pair and a rear pair, and each pair of wheels is steerable in the manner as claimed in any one of the preceding claims.

10. A wheeled vehicle according to Claim 8, wherein the pairs of wheels are steerable independently when the first steerage linkages are operative, and the pairs of wheels are steerable together and all wheels turn in the same direction when the second steering linkages are operative.

11. A wheeled vehicle according to Claim 9 when taken with Claim 5, wherein said piston and cylinder devices are located parallel to but inwardly of the vehicle relative to said axles.

12. A wheeled vehicle comprising front and rear pairs of wheels of which at least the front pair is steerable, to enable the vehicle to be steered round corners from a forward motion direction when a first steering arrangement is operative, and the front and rear pairs of wheels can be pivoted by the same amount and in the same direction to enable the vehicle to move bodily without changing its attitude at an angle to said fore and aft direction.

13. A wheeled vehicle according to any preceding claim wherein the vehicle is a side loader vehicle.

14. A wheeled vehicle according to any preceding claim, wherein at least one and preferably each of said wheels has its own hub motor for the propulsion of the vehicle.

FIG.1

M 23·01·88

0274388

FIG.2

*FIG 3*

14A

12A

32

16A

22

22

38

34

18A

14A

40

20

12A

36

0274388

FIG.4

FIG.5

FIG.6

0274388

_FIG. 7_

116

110

106

102

110

114

0274388

0244388

_FIG.8_

_FIG.9_